Europäisches Patentamt

European Patent Office

Office européen des brevets

(19)

(11) Numéro de publication : **0 658 792 A1**

(12) # DEMANDE DE BREVET EUROPEEN

(21) Numéro de dépôt : **94402825.7**

(22) Date de dépôt : **08.12.94**

(51) Int. Cl.⁶ : **G02F 1/015**

(30) Priorité : **09.12.93 FR 9314789**

(43) Date de publication de la demande :
**21.06.95 Bulletin 95/25**

(84) Etats contractants désignés :
**DE FR GB**

(71) Demandeur : **FRANCE TELECOM**
**6, Place d'Alleray**
**F-75015 Paris (FR)**

(72) Inventeur : **Pelekanos, Nikolaos**
**17 rue de Kervoilan**
**F-22100 Perros-Guirec (FR)**
Inventeur : **Deveaud-Pledran, Benoît**
**29 rue des Templiers**
**F-22300 Lannion (FR)**
Inventeur : **Gravey, Philippe**
**34 Rue Aristide Briand**
**F-22300 Lannion (FR)**
Inventeur : **Gérard, Jean-Michel**
**10 square Adanson**
**F-75005 Paris (FR)**

(74) Mandataire : **Martin, Jean-Jacques et al**
**Cabinet REGIMBEAU**
**26, Avenue Kléber**
**F-75116 Paris (FR)**

(54) **Opérateur optique à hétérostructure à puits quantiques.**

(57)    Opérateur optique destiné à être soumis à un rayonnement d'écriture pour traiter un rayonnement de lecture qu'il reçoit, comprenant un matériau électro-optique (Q2), un premier et un deuxième matériaux (Q1, Q3) répartis de part et d'autre du matériau électro-optique (Q2), ce premier et ce deuxième matériaux (Q1, Q3) étant des puits quantiques de collection, des matériaux (6,8) formant barrières quantiques étant interposés entre ces deux matériaux (Q1, Q3) et le matériau électro-optique (Q2), l'un (6) de ces matériaux formant barrière quantique constituant un filtre, que les charges d'un certain signe, photoexcitées par le rayonnement d'écriture dans un matériau (4, Q1) d'un côté de ce filtre, traversent, en l'absence de champ électrique extérieur, pour relaxer dans le puits quantique de collection (Q3) situé de l'autre côté de ce filtre (6), les charges de signe contraire étant bloquées par ce filtre (6) dans l'autre (Q1) puits de collection.

FIG. 2

EP 0 658 792 A1

La présente invention concerne un opérateur optique à hétérostructure à puits quantiques, tel qu'en particulier, mais non limitativement, un opérateur photoréfractif.

Dans un cristal photoréfractif, l'incidence de la figure d'interférence de deux faisceaux laser cohérents se traduit par l'écriture d'un réseau d'indices. Ce réseau peut à son tour dévier un troisième faisceau incident dans une direction qui dépend entièrement des propriétés du réseau. L'écriture optique d'un réseau d'indices, permettant de commander la déflexion d'un faisceau laser, confère aux matériaux PR un intérêt tout particulier pour la commutation de signaux optiques dans un réseau de télécommunications à large bande. On peut par exemple interconnecter une matrice de N entrées à fibres avec une matrice de M sorties à fibres. Le traitement parallèle et ultrarapide d'images représente également une application technologique particulièrement intéressante pour la reconnaissance des formes et les réseaux neuroniques.

La plupart des études déjà consacrées à ces applications concernaient les cristaux PR massifs. On pourra à cet égard se reporter à l'ouvrage de référence :

[1] "Photorefractive Materials and Their Applications I", P. Günter, J.P. Huignard, Springer, Berlin 1988.

Les cristaux massifs présentent toutefois deux inconvénients majeurs, à savoir des temps de réponse relativement longs (de l'ordre de la msec), et des exigences d'alignement très strictes, dues au phénomène de diffraction de Bragg.

Ces problèmes ont amené plusieurs équipes dans le monde à proposer des dispositifs photodiffractifs à couches minces à base de puits quantiques. Dans ce type de dispositif, la figure d'interférence incidente induit une modulation importante de l'indice de réfraction et du coefficient d'absorption (respectivement $\Delta\eta$ et $\Delta\alpha$) par l'intermédiaire des coefficients électro-optiques élevés autour de la bande interdite des puits quantiques. Ces dispositifs ont par nature un temps de réponse très court (de l'ordre de la $\mu$sec), et leur faible longueur optique permet d'éviter le phénomène de diffraction de Bragg.

On pourra avantageusement se référer en ce qui concerne les dispositifs photoréfractifs à couches minces connus de l'art antérieur aux différentes publications suivantes:

[2] Q. Wang, R. M. Brubaker, D. D. Nolte and M. R. Melloch, J. Opt. Soc. Am. B9, 1626 (1992), ainsi que les références qui y sont citées,

[3] A. Partovi, A. M. Glass, D.H. Olson, G. J. Zydjik, H. M. O'Bryan, T. H. Chiu, and W. H. Knox, Appl. Phys. Lett. 62, 464 (1993) ; ibid 59, 1832 (1991),

[4] G. Picoli, P. Gravey, J.E. Viallet, demande de brevet français publiée sous le numéro 2 678 093.

Les dispositifs photodiffractifs qui ont été décrits jusqu'à présent supposent l'application d'un champ électrique externe parallèle ou perpendiculaire au plan des puits quantiques. La géométrie perpendiculaire est celle qui présente le plus d'intérêt, grâce à l'effet électro-optique important obtenu par Effet Stark Quantique Confiné (également désigné par son abréviation en langue anglosaxonne : QCSE). On se référera avantageusement à cet égard à la publication :

[5] D.A.B. Miller, D.S. Chemla, T.C. Damen, A.C.Gossard, W.Wiegmann, T.H.Wood, C.A. Burrus,Phys.Rev,B32, 1043, (1985).

Dans le dispositif décrit dans [3], le mécanisme de photodiffraction peut être analysé comme suit:

1) La longueur d'onde est réglée sur une valeur proche de la résonance excitonique avec une absorption importante.

2) Les paires électrons-trous photocréées dans les puits traversent les barrières et sont attirées par le champ électrique vers les électrodes.

3) Les porteurs à proximité des électrodes sont piégés et écrantent le champ électrique appliqué, créant par Effet Stark Quantique Confiné des $\Delta\eta$ et $\Delta\alpha$ importants.

4) Si l'on crée une photoexcitation avec une figure d'interférence, on obtient un réseau $\Delta\eta$ et $\Delta\alpha$ en phase avec la figure d'intensité du laser. Suivant ce plan de fonctionnement, et bien que le phénomène de piégeage à l'interface entre les électrodes et le semi-conducteur ne soit pas évident, ces chercheurs ont rapporté des rendements de diffraction relativement élevés de 3 % avec une restriction importante, cependant, la période du réseau doit rester relativement élevée (30 $\mu$m). Lorsque la période du réseau diminue d'un facteur 10, le rendement de diffraction est réduit rapidement d'un facteur 1000. Cela tient à la diffusion latérale des porteurs, qui se produit soit pendant le déplacement vers les électrodes, soit après le piégeage à l'interface électrodes-semi-conducteur (en effaçant le réseau).

Différentes solutions ont été proposées pour obtenir une meilleure compréhension microscopique et une meilleure maîtrise du mécanisme de piégeage. Par exemple, FR-A-2 678 093 envisage une croissance épitaxique sur la couche des multi-puits quantiques d'une couche d'InP:Fe semi-isolante de quelques microns d'épaisseur, connue pour ses propriétés photoréfractives, et utilisée comme support d'écriture des réseaux. Cette écriture de réseaux peut être effectuée soit par photoexcitation directe des centres profonds au-dessous de la bande interdite des multi-puits quantiques, ou par photogénération des porteurs dans la région de multi-puits quantiques, qui vont alors s'échapper et être piégés dans la couche d'InP:Fe. Dans FR-A-2 678 093, le motif élémentaire est répété pour obtenir un effet plus important. Si on se limite à l'analyse du fonctionnement d'un seul motif, le rendement de diffraction sera limité du fait de la valeur du champ de diffusion dans InP:Fe massif (de l'ordre de 1KV/cm). Dans ce cas, cela nécessite l'utilisation d'un champ électrique externe pour améliorer le rendement de diffraction.

D'une manière ou d'une autre, les études citées plus haut font toutes appel à l'application d'un champ électrique externe. Cela nécessite un traitement délicat et long des échantillons, qui impose en plus des contraintes supplémentaires sur la performance du dispositif, la capacité d'intégration dans un système et les possibilités de miniaturisation.

Un but de la présente invention est précisément d'apporter des améliorations sur ce point essentiel, en proposant un opérateur optique qui peut être contrôlé de façon uniquement optique, sans nécessiter l'application d'un champ électrique externe.

Egalement, l'opérateur photoréfractif proposé par l'invention présente des rendements de diffraction exploitables et une résolution spatiale inférieure à 5 μm.

Il offre de plus des temps de réponse réglables autour de 1 μsec, et permet de s'affranchir des conditions d'alignement de Bragg.

En outre, les solutions proposées pour l'invention traitent le problème de la diffusion latérale, qui dégrade la résolution spatiale du dispositif photodiffractif étudié dans [3].

Il a déjà été proposé dans le document EP-478 060 d'utiliser un transfert d'électrons de type $\Gamma$-X pour séparer des électrons et des trous, de part et d'autre d'un matériau électro-optique, afin de créer un champ électrique pour la commutation d'un matériau électro-optique intermédiaire. Le seul mécanisme de transfert envisagé dans ce document est un transfert de type $\Gamma$-X, les électrons passant d'un premier puits vers une barrière juxtaposée et de cette barrière vers un second puits grâce à l'existence d'un état électronique intermédiaire dans la barrière.

Pour que ce mécanisme de transfert puisse intervenir, la largeur de la barrière est nécessairement limitée à une valeur voisine de 3,5 nm. L'effet Stark confiné (QSCE) est très limité du fait de la largeur importante de la raie excitonique associée.

L'invention propose une structure qui permet de pallier cet inconvénient majeur.

A cet effet, elle propose un opérateur optique destiné à être soumis à un rayonnement d'écriture qui le commande, pour traiter un rayonnement de lecture qu'il reçoit, comportant au moins un empilement élémentaire comprenant un premier et un deuxième matériaux formant puits quantiques de collection d'électrons et de trous disposés de part et d'autre d'une structure électro-optique qui comporte un puits quantique intermédiaire et deux barrières quantiques interposées entre ledit puits quantique intermédiaire et les puits quantiques de collection, l'une des barrières quantiques présentant pour des charges d'un certain signe au moins un niveau d'énergie qui est intermédiaire entre des niveaux d'énergie que présentent pour les mêmes charges le puits quantique intermédiaire et le puits quantique de collection séparé du puits quantique intermédiaire par ladite barrière, ces charges, lorsqu'elles sont photo-excitées par le rayonnement d'écriture dans ce puits quantique de collection, traversant cette barrière quantique jusqu'au puits quantique intermédiaire en prenant un (ou des) niveau(x) d'énergie intermédiaire(s), tandis que les charges de signe contraire sont bloquées par cette barrière quantique dans ce puits quantique de collection, caractérisé en ce que la deuxième barrière quantique est une barrière étroite que les charges transférées dans le puits quantique intermédiaire traversent par effet tunnel pour relaxer dans le deuxième puits quantique de collection.

Ainsi, dans la structure proposée par l'invention, les charges sont transférées d'un puits de collection à un puits large intermédiaire en utilisant un état électronique intermédiaire dans la barrière, puis sont transférées du puits intermédiaire vers un puits de collection final par effet tunnel.

Il est donc possible de choisir la largeur du puits intermédiaire de façon à maximiser l'effet électro-optique (15 nm de GaAs par exemple).

On notera que le transfert du premier puits de collection vers le puits intermédiaire peut être un transfert d'électrons de type $\Gamma$-X ou un transfert de trous par diffusion de type HH-LH (trous lourds - trous légers).

Dans le cas d'une application au dispositif photoréfractif, on notera que des îlots ou inclusions d'InAs sont avantageusement incorporés dans les matériaux formant puits quantiques de collection.

La description qui suit le mode de réalisation de l'invention est illustrative et non limitative. Elle doit être lue en regard des dessins annexés, sur lesquels :

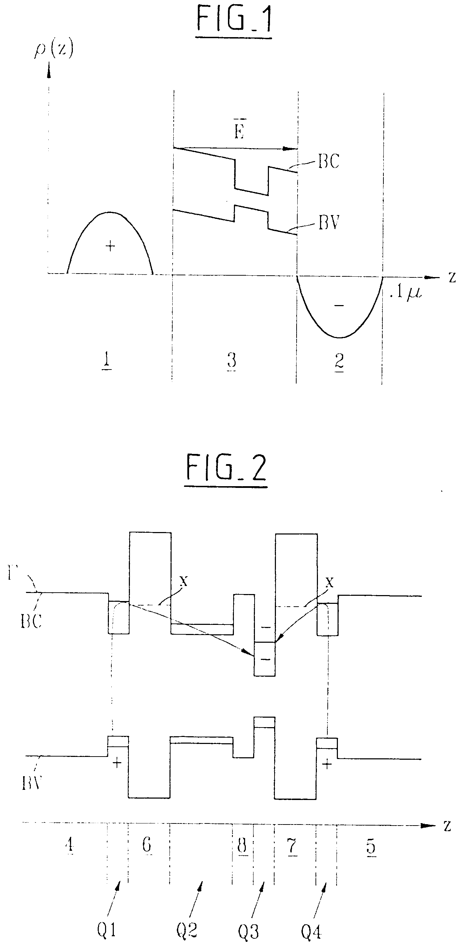

. la figure 1 illustre la répartition des charges dans l'épaisseur d'une hétérostructure photodiffractive élémentaire tout optique d'un dispositif conforme à l'invention recevant un rayonnement d'écriture ;

. la figure 2 est une représentation schématique d'une hétérostructure photodiffractive élémentaire tout optique à base de transfert d'électrons $\Gamma$-X, d'un dispositif conforme à un mode de réalisation particulier de l'invention ;

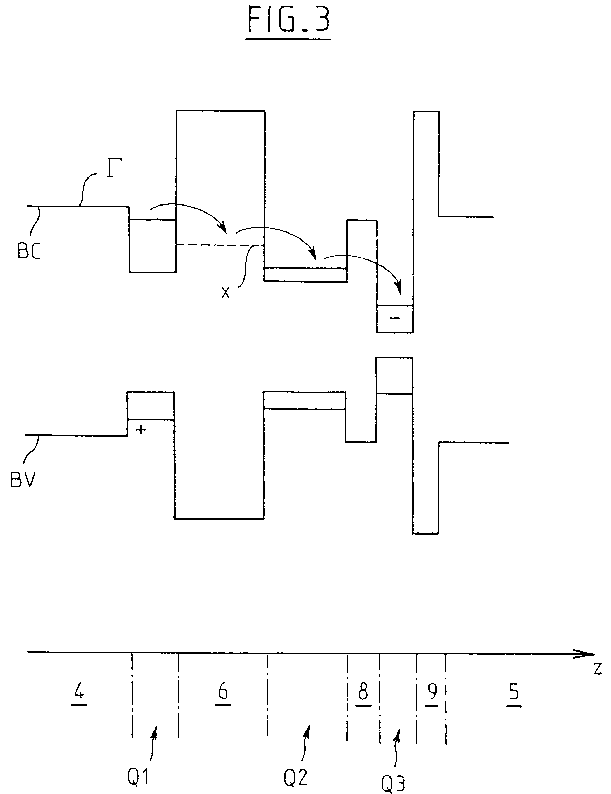

. la figure 3 est une représentation schématique d'une autre hétérostructure photodiffractive élémentaire tout optique à base de transfert d'électrons Γ-X ;

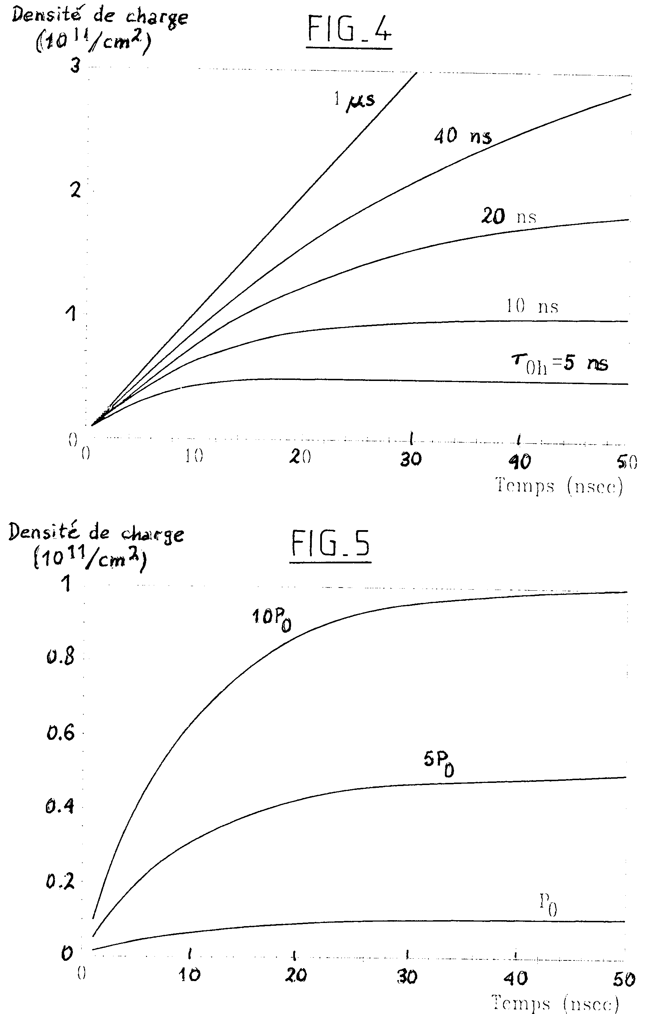

. la figure 4 représente en fonction du temps, pour l'hétérostructure de la figure 2, une modélisation de la densité de charge accumulée au puits de collection d'électrons, pour différentes valeurs $\tau_{oh}$ du temps de transfert des trous, la puissance $P_o$ du faisceau laser incident étant de 40 W/cm2 ;

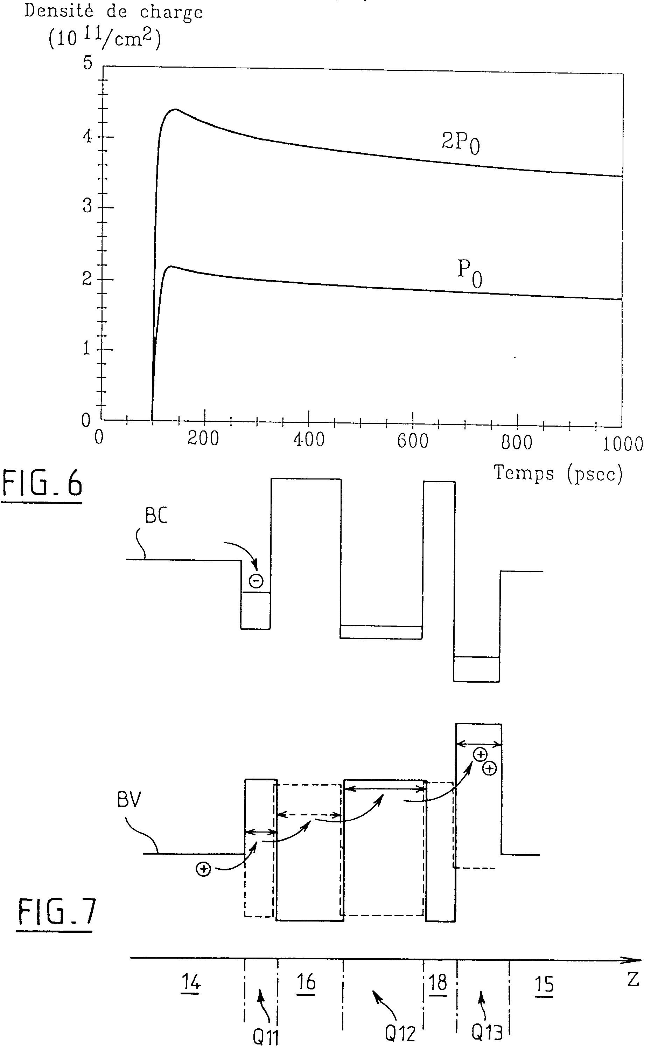

. la figure 5 représente, pour l'hétérostructure de la figure 2, une modélisation de la densité de charge accumulée au puits de collection d'électrons en fonction du temps, pour différentes valeurs de la puissance du laser ($P_o$= 4 W/cm2) ;

. la figure 6 représente, pour l'hétérostructure de la figure 2, une modélisation de la densité de charge accumulée au puits de collection d'électrons en fonction du temps, suite à une photoexcitation par impulsion laser à t = 100 psec, pour différentes valeurs de la puissance laser moyenne ($P_o$ = 50 W/cm2) ;

. la figure 7 est une représentation schématique des niveaux d'énergie et de potentiel dans une hétérostructure photodiffractive élémentaire tout optique qui est conforme à un autre mode de réalisation de l'invention et qui met en oeuvre une diffusion HH-LH.

Le principe de fonctionnement d'un opérateur tout optique conforme à l'invention est illustré sur la figure 1.

Chaque période de l'hétérostructure, de l'ordre de 0,1 μm, est conçue de manière que les porteurs photogénérés, après une photoexcitation par le rayonnement d'écriture au-dessus d'une énergie de bande interdite de l'hétérostructure, soient fortement séparés en relaxant dans des zones 1 et 2 différentes de la période de l'hétérostructure. Ces zones 1 et 2 sont des puits quantiques de collection, dans lesquels des densités importantes d'électrons et de trous vont respectivement s'accumuler.

Ces accumulations provoquent localement un champ électrique E de charge d'espace. Ce champ électrique E a son maximum dans la région 3 située entre les puits quantiques de collection 1 et 2. Il module par Effet Stark Quantique Confiné un troisième puits quantique situé dans la région 3 et dont la longueur d'onde de résonance excitonique est celle du rayonnement de lecture envoyé sur le dispositif pour être diffracté. Sur la figure 1, on a illustré schématiquement les déformations des bandes de conduction BC et de valence BV du puits quantique de la zone 3 sous l'effet du champ E photocréé.

Plus la densité de puissance du laser du rayonnement d'écriture augmente, plus les densités des charges sont élevées, et plus le champ électrique E photocréé localement est intense.

Dans le cas particulier d'un opérateur photoréfractif, on provoque une excitation avec une figure d'interférence, on obtient un réseau de $\Delta\eta$ et $\Delta\alpha$ inscrit en phase avec le réseau d'entrées, à des longueurs d'ondes au voisinage du puits quantique actif.

Plusieurs conceptions d'hétérostructures et de mécanismes physiques peuvent être envisagées. Les étérostructures élémentaires photodiffractives illustrées sur les figures 2 et 3 sont basées sur le transfert d'électrons Γ-X. Les semi-conducteurs utilisés sont GaAs, AlAs, InAs, et leurs alliages ternaires. Depuis une quinzaine d'années, l'épitaxie par jets moléculaires de ces matériaux a été réalisée, en plusieurs combinaisons.

Sur la figure 2, l'hétérostructure élémentaire représentée comporte quatre puits quantiques, référencés de gauche à droite sur la figure 2 de Q1 à Q4.

Les puits quantiques Q1 et Q4 sont des couches de GaAs étroites ($\leqq$ 35 Å), et sont entourés chacun par une barrière référencée par 4, 5 de $Al_xGa_{1-x}As$ (avec typiquement x = 40 % et une épaisseur de 500 Å) et une barrière 6,7 de AlAs (50-300 Å).

Conformément à l'un des aspects de l'invention, les puits quantiques Q1 et Q4 de GaAs étroits se combinent avec les barrières 6, 7 d'AlAs adjacentes. Lors d'une photoexcitation en résonance avec les barrières 4, 5 de AlGaAs ($\lambda_{\text{écriture}} \approx 650$ nm) ou avec les puits quantiques Q1 et Q4 de GaAs étroits ($\lambda_{\text{écriture}} \approx 750$ nm), cette combinaison agit sur les photoporteurs du puits quantique Q1 et du puits quantique Q4 comme un "tamis" quantique monodirectionnel, en bloquant les trous à l'extérieur dans les puits Q1 et Q4, mais en permettant le transfert d'électrons vers le puits quantique Q2 et le puits quantique Q3.

Le transfert d'électrons est un transfert Γ-X, que l'on a représenté schématiquement par des doubles flèches sur la figure 2. Le transfert Γ-X dans des hétérostructures (Al,Ga)As/AlAs) a notamment été décrit dans la publication :

[6] J. Feldmann, J. Nunnenkamp, G. Peter, E. Göbel, J. Kuhl, K. Ploog, P. Dawson, C.T. Foxon, Phys. Rev. B 42, 5809 (1990).

Il est notamment expliqué dans cette publication que le niveau d'énergie des électrons au point Γ dans le puits quantique de GaAs peut être plus élevé que celui du point X dans la barrière AlAs, à condition que l'épaisseur du puits quantique GaAs soit $\leqq$ 40 Å. On a mesuré des temps de transferts d'électrons Γ-X de l'ordre de 0,1-1 psec. Ces valeurs dépendent directement du recouvrement spatial des fonctions d'ondes des électrons Γ et X dans les différentes couches.

Ainsi, dans des temps courts d'une picoseconde, les trous vont commencer à s'accumuler dans le puits quantique Q1 et le puits quantique Q4, alors que dans le puits quantique Q3, qui ici est une couche de $In_xGa_{1-x}As$ de 100 à 300 Å d'épaisseur (où x = 5-15 %), on aura une accumulation d'électrons. On remarquera que les électrons passant du puits quantique Q1 dans le puits quantique Q2 vont également s'accumuler dans le puits quantique Q3, en traversant par effet tunnel la fine barrière 8 interposée d'AlGaAs.

Le champ électrique, ainsi photocréé, agit sur la résonance excitonique du puits quantique Q2, qui est ici constitué par une couche de GaAs de 100-300 Å d'épaisseur. La longueur d'onde de lecture $\lambda_{lecture}$ est alors $\approx 850 \pm 30$ nm.

Pour former un champ électrique intense, les trous lourds doivent rester le plus longtemps possible dans le puits quantique Q1 et le puits quantique Q4. La différence entre les énergies des bandes interdites de GaAs et AlAs au point $\Gamma$ est de 1500 meV. Si l'on répartit cette différence entre les bandes de conduction et de valence dans la proportion 66/34, on obtient une barrière de potentiel des trous $E_b = 500$ meV. Cette valeur est suffisante, et on peut en principe obtenir un temps de transfert par effet tunnel très long, en faisant varier l'épaisseur d'AlAs. Mais il faut aussi tenir compte d'un autre phénomène pour un dispositif à température ambiante : il s'agit du transfert de trous par-dessus la barrière de AlAs par émission thermo-ionique.

Ainsi que cela a été établi dans les publications :

[7] H. Schneider and K. v. Klitzing, Phys. Rev. B 38, 6160 (1988), et

[8] J. A. Cavailles, D. A. B. Miller, J. E. Cunningham, P. Li Kam Wa, A. Miller, Appl. Phys. Lett. 61, 426 (1992),

on peut trouver une évaluation de ce temps de transfert par émission thermo-ionique, d'après la formule suivante :

$$\tau = W \left( \frac{2\pi m}{KT} \right)^{\frac{1}{2}} \exp\left( \frac{E_b - E - eFW/2}{KT} \right) \qquad (1)$$

où W est l'épaisseur du puits quantique, m la masse du trou lourd ($\approx 0,5\ m_o$), $E_b = 500$ meV, E l'énergie de confinement du trou ($\leqq 120$ meV), et F le champ électrique. La contribution du champ dans l'exposant est négligeable si W = 25 Å and F = 5 x $10^4$ V/cm. Il ressort de la formule (1) que $\tau \approx 1$ µsec à température ambiante, ce qui permet des valeurs du champ électrique très élevées, comme on va le voir plus loin.

Un dispositif tout optique de cette sorte est efficace, ultrarapide, et fonctionne à des puissances laser modérées.

On a pu démontrer qu'en utilisant des lasers de puissance modérée (quelques dizaines de W/cm²) en champ continu ou en fonctionnement par impulsions, on peut créer des champs électriques suffisamment élevés, générés dans cette hétérostructure par un procédé tout optique.

En variante, ainsi qu'illustré sur la figure 3, l'empilement élémentaire de l'hétérostructure peut ne comporter que les trois puits Q1 à Q3, le puits Q3 étant uniquement séparé de la couche 5 par une barrière étroite 9. Ainsi que l'indiquent les flèches sur cette figure 3, les électrons sont transférés à travers la barrière 6 du puits de collection Q1 au puits intermédiaire Q2 par transfert de type $\Gamma$-X, puis traversent la barrière 8 par effet tunnel.

Une modélisation du comportement de l'hétérostructure de la figure 2 va maintenant être décrite. Le modèle utilisé, qui est basé sur l'intégration numérique d'un système d'équations différentielles couplées, est une extension de celui qui a été décrit dans :

[9] R. Strobel, R. Eccleston, J. Kuhl, K. Köhler, Phys. Rev. B 43, 12564 (1991).

Pour chaque puits quantique, on prend en compte les équations de trois espèces : les électrons, les trous et les excitons. Les électrons et les trous peuvent passer d'un puits quantique à l'autre avec des constantes de temps différentes, et former un exciton avec un débit de formation bimoléculaire. On peut supposer, pour simplifier, qu'ils peuvent aussi transférer d'un puits quantique à l'autre, même quand ils ont formé un exciton, avec les mêmes temps de transferts que lorsqu'ils sont libres. L'hypothèse principale de ce modèle est que le seul processus qui provoque une perte d'énergie de notre système de particules soit la combinaison radiative d'excitons.

Les résultats ici présentés ont été obtenus avec un temps de transfert d'électrons $\tau_o$ à travers le "tamis" quantique de GaAs/AlAs égal à 1 psec, le temps de transfert des trous $\tau_{oh}$ utilisé comme paramètre ajustable. Les temps de tunnel à travers la fine couche de AlGaAs des électrons et des trous sont supposés respectivement égaux à 10 psec et 100 psec. Enfin, la constante de temps de recombinaison d'excitons est supposée égale à 1000 psec. En fait, nos calculs ont montré que les valeurs de densité de charge accumulée dépendent en grande partie du rapport $\tau_{oh}/\tau_o$, qui représente l'assymétrie du transfert des porteurs, et que pour photocréer un champ électrique $\geqq 20$ KV/cm, ce rapport devrait être $\geqq 10^4$.

La figure 4 représente la densité de charge accumulée dans le puits quantique Q3 en fonction du temps qui suit l'apparition d'un champ laser continu à t = 0, pour différentes valeurs de $\tau_{oh}$. On suppose que la densité

EP 0 658 792 A1

de puissance est égale à 40 W/cm$^2$ et la longueur d'onde du laser est réglée au-dessus de la bande interdite d'AlGaAs. La densité de charge devient stable après un temps de réponse de quelques $\tau_{oh}$ et atteint des valeurs qui dépendent fortement de $\tau_{oh}$. On notera qu'il est possible de régler $\tau_{oh}$ en dessous de 1 $\mu$sec, en modifiant l'épaisseur de la barrière de AlAs, ce qui permet de réduire encore le temps de réponse du dispositif. On peut facilement obtenir des densités de charges de l'ordre de quelques 10$^{11}$/cm$^2$ avec des valeurs de $\tau_{oh}$ plutôt modérées, étant donné que la valeur du temps d'émission thermo-ionique à température ambiante a conduit à estimer que $\tau_{oh}$ est de l'ordre d' 1 $\mu$sec. Une densité de charge de 3 x 10$^{11}$/cm$^2$ correspond à un champ électrique dans le puits quantique actif de $\approx$ 50KV/c. Dans ce champ électrique, on peut s'attendre à $\Delta\eta_{max}$ = 0,05 et $\Delta\alpha_{max}$ = 5000 cm$^{-1}$ dans la référence [5]. Mais on remarquera que dans le cas de champs électriques $\geqq$ 50 kV/cm, il faut tenir compte de l'éventualité qu'une courbure de bande provoque des taux de transferts par effet tunnel inverse importants (ainsi que cela été décrit dans :

[10] R. Sauer, K. Thonke, W. T. Tsang, Phys. Rev. Lett. 61, 609 (1988)),

et fixe une limite supérieure à la valeur de densité de charge qui peut être stockée dans ce système. La puissance varie linéairement en fonction de la densité de charge dans le puits quantique 3, au moins dans la gamme de puissance considérée ici, à savoir de 0 à 40 W/cm$^2$. Ceci est illustré par la figure 5, qui représente une courbe de la densité de charge incorporée en fonction du temps à différentes densités de puissance (P$_o$ = 4 W/cm$^2$, et $\tau_{oh}$ = 10 nsec).

Il convient de souligner que le dispositif qui vient d'être décrit offre des performances comparables à celles du dispositif présenté dans [3] : si $\tau_{oh}$ est de l'ordre de 1 $\mu$sec, on peut obtenir un champ électrique de 50 KV/cm, avec des temps de commutation de 1 $\mu$sec et une densité de puissance de 1 W/cm$^2$.

Le dispositif peut également être utilisé en mode pulsé. Ce type de fonctionnement correspond mieux aux mises en oeuvre futures de ce dispositif dans des machines comportant une horloge interne. C'est une bonne solution également pour lutter contre la limitation de performances due à la diffusion latérale, comme on va le voir ci-dessous. La figure 6 montre la courbe de la densité de charge stockée dans le puits quantique Q3, suite à une impulsion laser étroite au temps t = 100 psec. Ici, on suppose que la largeur d'impulsion est de 2 psec, et la puissance moyenne P$_o$ = 50 W/cm$^2$ avec un taux de répétition de 80 MHz. Comme on peut s'y attendre, quelques dizaines de psec sont suffisantes pour stocker une grande population d'électrons dans le puits quantique Q3, grâce aux temps de transferts d'électrons, qui sont très courts ($\tau_o$ = 1 psec et $\tau_e$ = 10 psec). Cette population décroît lentement avec une constante de temps $\tau_{oh}$ qui dans le cas présent est égale à 10 nsec.

On notera que l'on se trouve ainsi dans une situation remarquable, où une seule impulsion laser suffit à mettre en place au coeur du dispositif un champ électrique local de l'ordre de 50 KV/cm. De plus, la durée de vie de ce champ électrique peut être réglée en modulant $\tau_{oh}$.

Ainsi que cela a déjà été dit plus haut, la diffusion latérale limite le rendement de diffraction et la résolution spatiale. On peut estimer grossièrement ces limites, à partir des coefficients de diffusion de GaAs massif à T = 300 K, D$_n$ = 100 cm$^2$/sec et D$_p$ = 10 cm$^2$/sec respectivement pour les électrons et les trous (voir notamment :

[11] S. M. Sze, Physics of Semiconductor Devices, Wiley-Interscience, page 55, (1981)).

Cela aboutit en un temps d'environ 100 psec à une importante diminution du contraste d'une répartition de charges de période 10 $\mu$m, du fait de la diffusion latérale. Etant donné que dans le dispositif étudié par A. Partovi et al. [3], le temps de transfert vers les électrodes est de l'ordre de 100 psec, on peut expliquer, au moins qualitativement, la faible résolution spatiale rapportée par les auteurs. Le manque de transfert macroscopique est inhérent à notre dispositif, qui fonctionne à base de transfert et stockage local des porteurs. Cependant, la diffusion latérale des porteurs stockés se produit le long des plans du puits quantique et peut être une limitation sérieuse des performances.

Deux solutions sont proposées.

La première suppose l'incorporation d'îlots d'InAs dans le puits quantique de collection des électrons. A condition que la couche 2D d'îlots de InAs puisse stocker des densités de charges élevées, la mobilité latérale réduite du type (hopping) des électrons piégés pourrait "geler" spatialement les populations d'électrons dans la figure d'interférence. Cela réduirait également la diffusion latérale des trous, par attraction électrostatique.

Une autre solution consiste à utiliser des impulsions laser picosecondes. En supposant que la diffusion latérale soit élevée après quelques centaines de psec, on peut encore définir une "fenêtre" de temps opérationnel, comme on peut le voir sur la figure 6.

Le dispositif se charge de manière optique. Cela réduit automatiquement le nombre de périodes auxquelles on peut accéder optiquement. En fixant comme condition pour une densité de charge homogène dans l'épaisseur

6

$$\exp\left(-N\sum_i \alpha_i x_i\right) = \exp(-1) \qquad (2)$$

où N est le nombre de périodes et $\Sigma_i \alpha_i$, $x_i$ représente l'épaisseur optique d'une période, où $\Sigma_i$ est obtenue par sommation sur toutes les couches absorbantes dans une période. Dans le cas de longueurs d'ondes d'excitation en résonance avec les barrières d'AlGaAs, le nombre de périodes accessibles N est égal à 15, mais pour des longueurs d'ondes en résonance avec les puits quantiques étroits de GaAs, N est égal à 50. Ces valeurs correspondent respectivement à des régions actives de 0,2 μm et 0,6 μm. Mais dans le deuxième cas, les temps de charge sont plus longs.

Pour un réseau mince (régime de Raman-Nath), on obtient le rendement de diffraction du premier ordre, c'est-à-dire l'intensité du faisceau de premier ordre relativement à l'intensité totale transmise, grâce à l'équation suivante :

$$\frac{I_l}{I_o} \approx \left(\frac{2\pi\Delta\eta l}{\lambda}\right)^2 + \left(\frac{\Delta\alpha l}{2}\right)^2 \qquad (3)$$

où $\Delta\eta$ et $\Delta\alpha$ sont les composantes de l'indice de réfraction et d'absorption du réseau photodiffractif pour une longueur d'onde $\lambda$. l représente l'épaisseur totale du réseau. L'équation (3) permet de faire une simple estimation, en supposant une longueur d'onde où $\Delta\alpha = \Delta\alpha_{max}$ et $\Delta\eta$ a une faible valeur. Pour $\Delta\alpha_{max} = 5000$ cm$^{-1}$ et l = 0,6 μm, le rendement de diffraction obtenu est d'environ 2 %. Le rendement de diffraction global (qui prend en compte l'absorption) est deux à trois fois plus faible.

Le point clé pour une photodiffractivité tout optique est la forte séparation locale des porteurs photogénérés. Dans le dispositif qui vient d'être décrit, on a exploité le transfert rapide Γ - X des électrons d'une couche étroite de GaAs à une couche d'AlAs.

D'autres matériaux et mécanismes physiques conviennent pour permettre d'obtenir une forte séparation locale des charges. Dans le paragraphe qui suit, certains d'entre eux vont être passés en revue.

Dans le dispositif Γ - X basé sur les filtres quantiques GaAs/AlAs, on définit la longueur d'onde de lecture par le puits quantique actif. Par exemple, si on choisit 150 Å de GaAs comme puits quantique actif, la longueur d'onde de fonctionnement sera ≈ 850 nm. L'utilisation d'InGaAs comme puits quantique actif devrait en principe faire décroître $\lambda_{lecture}$ à des longueurs d'ondes plus longues. Mais en pratique, on est limité par des problèmes de contrainte. En fait, il est nécessaire d'avoir In$_x$ Ga$_{1-x}$ As avec x ≈ 50 %, pour ajuster la résonance du puits quantique actif sur la longueur d'onde "télécom", qui est de 1,55 μm. Le désaccord de maille important de 3 % entre cet alliage et le substrat de GaAs limiterait l'épaisseur totale du puits quantique actif à moins de 100 Å, pour éviter la formation de dislocations. On remarquera cependant qu'en utilisant InGaAs avec une faible proportion d'In (≈ 10 %) dans le puits quantique actif, on peut obtenir $\lambda_{lecture}$ autour de ≈ 1 μm.

Pour pouvoir fonctionner à 1,55 μm à partir de la méthode Γ-X, il faut recourir au système AlSb/GaSb/AlGaSb. Ce système présente un léger désaccord de maille entre les limites binaires (0,6 %) et a une caractéristique unique : le minimum de la bande de conduction change deux fois de symétrie lorsque l'on augmente la proportion d'Al: de Γ à L, pour $x_{Al}$ ≈ 0,25 et de L à X pour $x_{Al}$ ≈ 0,65. GaSb présente encore une caractéristique unique : la proximité des minima de Γ et L (seulement 90 meV), ce qui aboutit au fait que dans des puits quantiques GaSb/AlSb où l'épaisseur des puits quantiques ne dépasse pas 40 Å, les niveaux quantisés au point L ont une énergie plus faible que ceux du point Γ. Ceci est dû à la masse d'électrons beaucoup plus importante au point L (c.f. à cet égard la publication

[12] U. Cebulla, G. Trankle, U. Ziem, A. Forchel, G. Griffiths, H. Kroemer, S. Subanna, Phys. Rev. B 37, 6278 (1988)).

En tenant compte de ces particularités du système GaSb/Alsb, et selon le schéma présenté sur la figure 2, de gauche à droite, une période de cette hétérostructure pourrait être lue comme suit :

*AlSb/GaSb*(1)*/AlGaSb/GaSb*(2)*/AlGaSb/InGaSb*(3)*/AlGaSb/GaSb*(4)*/AlSb*

où la proportion d'Al dans le AlGaSb est d'environ 65 %, et l'épaisseur du puits quantique 1 et du puits quantique 4 est réglée pour assurer le transfert d'électrons Γ - X (c'est-à-dire que le niveau de Γ dans le puits est plus élevé que le niveau de X dans la barrière d'AlGaSb). De même, l'épaisseur du puits quantique Q2 est adaptée pour régler la résonance de l'exciton à température ambiante à 1,55 μm. Le puits quantique Q3 permet de stocker les électrons et peut être remplacé par des îlots d'InSb. La couche intermédiaire d'AlGaSb est suffisamment fine pour assurer un passage rapide des électrons, alors que les autres couches d'AlGaSb sont plus épaisses, de manière à bloquer efficacement les trous dans le puits quantique Q1 et le puits quantique Q4.

Dans des hétérostructures contraintes, la contrainte biaxe, due au désaccord de maille entre les matériaux adjacents, peut être considérée comme un degré de liberté supplémentaire pour les propriétés optiques de l'hétérostructure. En particulier, dans des hétérostructures contraintes avec un léger décalage de bande de valence, on obtient un alignement de type I pour l'exciton de trou lourd (HH) et un alignement de type II pour celui du trou léger (LH). Ceci implique que lorsque les électrons et les HH sont confinés dans le matériau du puits quantique, les LH ont tendance à se localiser dans la couche de barrière, malgré l'attraction coulombienne provoquée par l'électron. De plus, une conception judicieuse permet que le niveau de HH du puit quantique ait une énergie supérieure à celle du niveau de LH dans la barrière. Cela provoquerait des taux de transferts rapides de l'état HH du puits quantique vers la barrière, par un procédé de diffusion HH-LH, présentant une analogie étroite avec le transfert d'électrons $\Gamma$ - X dans le système GaAs/AlAs. On peut citer comme exemple de tels systèmes (In,Ga)As/GaAs et CdTe/(Cd,Zn)Te, qui présentent des décalages de bande de valence chimique peu importants (respectivement ± 10 % et ±5 %).

Une telle structure à base de CdTe/(Cd,Zn)Te a par exemple un empilement élémentaire comme suit :

$$
\overset{(I)}{(Cd,Zn)Te\left(x_{Zn=0.1}\right)/CdTe(1)/(Cd,Zn)Te\left(x_{Zn=0.2}\right)/}
$$

$$
\overset{(II)}{CdTe(2)/(Cd,Zn)Te\left(x_{Zn=0.2}\right)/(Cd,Hg)Te\left(x_{Hg=0.2}\right)(3)/}
$$

$$
\overset{(III)}{(Cd,Zn)Te\left(x_{Zn=0.1}\right).}
$$

La structure est sur un alliage de (Cd,Zn)Te où la concentration molaire du Zn est de 10 %. La concentration de Zn de l'alliage support impose l'état de contrainte dans toute l'hétérostructure.

La combinaison

$$
\overset{(I)}{CdTe(1)/(Cd,Zn)Te\left(x_{Zn=0.2}\right)}
$$

sur un buffer (Cd,Zn)Te($x_{Zn}$=0.1) constitue le "filtre quantique". Ceci permet aux trous lourds du puits CdTe(1) de transférer par l'intermédiaire des états trous légers de la barrière

$$
\overset{(I)}{(Cd,Zn)Te\left(x_{Zn=0.2}\right)}
$$

au puits CdTe(2) et ensuite par effet tunnel au puits (Cd,HS)Te($x_{Hg}$=0.2) (3). En même temps, les électrons restent piégés au puits CdTe(1).

Cette structure a été illustrée sur la figure 7 sur laquelle on a représenté les niveaux d'énergie et de potentiel d'un empilement élémentaire comportant un puits Q11 de CdTe, une barrière 16 de (Cd,Zn)Te (20 %), un puits intermédiaire large Q2 de CdTe, une barrière fine 18 de (Cd,Zn)Te (20 %) que les charges du puits intermédiaire 18 traversent par effet tunnel, un puits de collection Q13 de (Cd,Hg)Te (20 %), une couche de matériau matriciel de (Cd, Zn)Te (10%).

Sur cette figure 7, les traits en pointillés indiquent les niveaux de potentiel des trous légers (LH).

Les doubles flèches en pointillés indiquent les niveaux d'énergie des trous légers (LH).

Les traits ininterrompus indiquent les potentiels des trous lourds (HH).

Les doubles flèches en traits ininterrompus indiquent les niveaux d'énergie des trous lourds (HH).

Ainsi que l'on peut le voir sur cette figure 17, les trous de la couche 14 sont transférés par effet HH-LH jusqu'au puits intermédiaire Q12, par effet tunnel à travers la barrière fine 18, dans le puits de collection 17.

Les électrons de la couche 14 relaxent dans le puits Q11 dans lequel ils sont bloqués par la barrière 16.

L'invention a été décrite ici dans le cas particulier des opérateurs photoréfractifs mais s'applique à d'autres opérateurs utilisant la forte séparation des charges photoexcitées pour induire de grandes variations $\Delta n$ et $\Delta \alpha$ de coefficients électro-optiques. Un tel opérateur est par exemple un modulateur optique, contrôlé optiquement par un faisceau d'écriture qui photocrée un champ électrique commandant l'absorption d'un faisceau de lecture par une couche électro-optique. La modulation du faisceau de lecture peut être ainsi contrôlée de façon tout optique.

En variante également, les barrières et puits peuvent être des gradients de composition (notamment puits Q4 sur la figure 2).

## Revendications

1. Opérateur optique destiné à être soumis à un rayonnement d'écriture qui le commande, pour traiter un rayonnement de lecture qu'il reçoit, comportant au moins un empilement élémentaire comprenant un premier et un deuxième matériaux formant puits quantiques (Q1, Q3) de collection d'électrons et de trous disposés de part et d'autre d'une structure électro-optique (6, Q2, 8) qui comporte un puits quantique intermédiaire (Q2) et deux barrières quantiques (6, 8) interposées entre ledit puits quantique intermédiaire (Q2) et les puits quantiques de collection (Q1, Q3), l'une (6) des barrières quantiques présentant pour des charges d'un certain signe au moins un niveau d'énergie qui est intermédiaire entre des niveaux d'énergie que présentent pour les mêmes charges le puits quantique intermédiaire (Q2) et le puits quantique de collection (Q1) séparé du puits quantique intermédiaire par ladite barrière, ces charges, lorsqu'elles sont photo-excitées par le rayonnement d'écriture dans ce puits quantique de collection (Q1), traversant cette barrière quantique (6) jusqu'au puits quantique intermédiaire en prenant un (ou des) niveau(x) d'énergie intermédiaire(s), tandis que les charges de signe contraire sont bloquées par cette barrière quantique (6) dans ce puits quantique de collection (Q1), caractérisé en ce que la deuxième barrière quantique (8) est une barrière étroite que les charges transférées dans le puits quantique intermédiaire (Q2) traversent par effet tunnel pour relaxer dans le deuxième puits quantique de collection (Q3).

2. Opérateur optique selon la revendication 1, caractérisé en ce que l'empilement élémentaire comporte en outre un troisième puits quantique de collection (Q4) semblable au premier puits quantique de collection (Q1), ainsi qu'une troisième barrière quantique (7) qui est semblable à la première barrière quantique (6), les charges photo-excitées par le rayonnement d'écriture dans le troisième puits quantique de collection (Q4) traversant la troisième barrière quantique en prenant un (ou des) niveau(x) d'énergie intermédiaire(s), pour relaxer pour le deuxième puits quantique de collection (Q2), les charges de signe contraire étant bloquées dans ledit troisième puits quantique de collection (Q4) par ladite troisième barrière quantique (7).

3. Opérateur optique selon l'une des revendications 1 ou 2, caractérisé en ce que le transfert de charges du premier puits quantique de collection au puits quantique intermédiaire, à travers la première barrière quantique est un transfert d'électrons de type $\Gamma$-X.

4. Opérateur optique selon la revendication 3, caractérisé en ce qu'un empilement élémentaire est :
   AlGaAs/GaAs/AlAs/GaAs/AlGaAs/InGaAs/AlAs/GaAs/AlGaAs
   le rayonnement de lecture étant d'une longueur d'onde au voisinage de 850 nm, le rayonnement d'écriture étant d'une longueur d'onde sensiblement comprise entre 650 et 750 nm.

5. Opérateur optique selon l'une des revendications précédentes, caractérisé en ce que le matériau électro-optique est un puits quantique dont la longueur d'onde excitonique est au voisinage de 1,55 $\mu$m.

6. Opérateur optique selon la revendication 5, caractérisé en ce que le matériau électro-optique est $In_xGa_{1-x}As$, avec x = 50 %.

7. Opérateur optique selon la revendication 5, caractérisé en ce que le motif élémentaire est un empilement :
   *AlSb/GaSb(1)/AlGaSb/GaSb(2)/AlGaSb/InGaSb(3)/AlGaSb/GaSb(4)/AlSb.*

8. Opérateur optique selon l'une des revendications 1 ou 2, caractérisé en ce que le transfert de charges du première puits quantique de collection au puits quantique intermédiaire, à travers la première barrière quantique, est un transfert de trous par diffusion de type HH-LH.

9. Opérateur optique selon la revendication 8, caractérisé en ce qu'un empilement élémentaire est un empilement d'(In,Ga)As/GaAs ou de CdTe/(Cd,Zn)Te.

10. Opérateur optique selon les revendications précédentes, caractérisé en ce que le faisceau d'écriture est un faisceau pulsé de durée d'impulsion de l'ordre de la picoseconde.

11. Opérateur optique selon l'une des revendications précédentes, caractérisé en ce qu'il constitue un dispositif photoréfractif, le matériau électro-optique (Q2) étant soumis à un réseau de champ électrique de diffraction créé par les franges d'interférence du faisceau d'écriture.

12. Opérateur optique selon la revendication 11, caractérisé en ce que des îlots d'InAs sont incorporés dans les matériaux formant puits quantiques de collection.

## FIG.1

## FIG.2

# FIG.3

FIG_4

Densité de charge $(10^{11}/cm^2)$

$1\,\mu s$
40 ns
20 ns
10 ns
$\tau_{0h}=5\ ns$

Temps (nsec)

FIG_5

Densité de charge $(10^{11}/cm^2)$

$10P_0$
$5P_0$
$P_0$

Temps (nsec)

Densité de charge
$(10^{11}/cm^2)$

5

4        2P$_0$

3

2        P$_0$

1

0
0        200       400       600       800       1000

Temps (psec)

## FIG.6

BC

⊖

## FIG.7

BV

⊕

⊕
⊕ ⊕

14        16        18        15        Z

Q11       Q12       Q13

<table>
<tr><td></td><td>Office européen</td><td rowspan="2">**RAPPORT DE RECHERCHE EUROPEENNE**</td><td>Numero de la demande</td></tr>
<tr><td></td><td>des brevets</td><td>EP 94 40 2825</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | EP-A-0 478 060 (PHILIPS) 1 Avril 1992<br>* abrégé *<br>* colonne 5, ligne 24 - ligne 51 *<br>* colonne 9, ligne 19 - ligne 55 *<br>* colonne 15, ligne 19 - colonne 16, ligne 56 *<br>* revendications 1-4,7,9; figures 6,7 *<br>--- | 1,3-7 | G02F1/015 |
| A | WO-A-92 22847 (FRANCE TELECOM) 23 Décembre 1992<br>* abrégé *<br>* page 8, ligne 3 - page 10, ligne 17 *<br>* revendications 1,2,4,7,9 * | 1,11 | |
| D | & FR-A-2 678 093<br>--- | | |
| A | JOURNAL OF THE OPTICAL SOCIETY OF AMERICA - B,<br>vol.7, no.11, Novembre 1990, NEW YORK US<br>pages 2217 - 2225, XP000162466<br>Nolte D D et al 'Resonant photodiffractive effect in semi-insulating multiple quantum wells'<br>* chapitre 1, alinéa 3 *<br>* chapitres 4,7; figures 3,7 *<br>--- | 1,11 | |
| A,D | APPLIED PHYSICS LETTERS.,<br>vol.59, no.7, Octobre 1991, NEW YORK US<br>pages 1832 - 1834, XP000265117<br>Partovi A et al 'High sensitivity optical image processing device based on CdZnTe/ZnTe multiple quantum well structures'<br>* page 1832, alinéa 1 -alinéa 3 *<br>* page 1834, alinéa 2 *<br>----- | 1,10,11 | |

**DOMAINES TECHNIQUES RECHERCHES (Int.Cl.6)**

G02F

Le présent rapport a été établi pour toutes les revendications

| Lieu de la recherche | Date d'achèvement de la recherche | Examinateur |
|---|---|---|
| LA HAYE | 3 Avril 1995 | Iasevoli, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)